# FASCICULE DE BREVET EUROPEEN

(11) **EP 0 758 130 B1**
(45) Date de publication et mention de la délivrance du brevet: **17.03.1999**
(21) Numéro de dépôt: 96401563.0
(22) Date de dépôt: 15.07.1996
(51) Int. Cl.: G21F 9/34, G21C 19/36

(54) **Procédé et dispositif de stockage de barres de commande usagées d'un réacteur nucléaire**
Verfahren und Vorrichtung zur Aufbewahrung benutzter Kontrollstäbe von Kernreaktoren
Process and device for storing used nuclear reactor control rods

(30) Priorité: 09.08.1995 FR 9509686
(43) Date de publication de la demande: 12.02.1997
(73) Titulaire: FRAMATOME, 92400 Courbevoie (FR)
(72) Inventeur: Dubourg, Michel, 78320 Le Mesnil Saint Denis (FR)
(74) Mandataire: Bouget, Lucien

(56) Documents cités:
- EP-A- 0 344 051
- US-A- 4 434 092
- US-A- 4 648 989
- US-A- 4 788 027

## Description

L'invention concerne un procédé et un dispositif permettant le stockage de barres de commande usagées d'un réacteur nucléaire et en particulier d'un réacteur nucléaire à eau bouillante.

Les barres de commande de certains réacteurs nucléaires et en particulier de certains réacteurs nucléaires à eau bouillante qui sont utilisées pour régler la puissance du réacteur nucléaire pendant son fonctionnement, comportent des éléments de roulement tels que des billes qui permettent de réaliser le guidage des barres de commande pendant leurs déplacements pour assurer le réglage de la puissance du réacteur nucléaire.

Les billes de guidage des barres de commande sont montées et serties à l'intérieur d'une partie supérieure de la barre de commande réalisée en acier inoxydable. Les barres de commande des réacteurs nucléaires à eau bouillante ont généralement une section en forme de croix et chacune des barres de commande comporte quatre billes de guidage montées chacune à l'extrémité d'une aile de la barre profilée en forme de croix, dans une partie supérieure de la barre de commande réalisée en acier inoxydable.

De manière à réduire l'usure des billes, on a réalisé ces billes, dans un certain nombre de réacteurs à eau bouillante, en un alliage de cobalt résistant à l'usure tel qu'un stellite à 55 % de cobalt.

Dans ces réacteurs à eau bouillante, la partie supérieure des barres de commande qui sont introduites à la verticale, dans le coeur du réacteur, par le dessous sont insérées dans le coeur de manière pratiquement constante pendant le fonctionnement du réacteur nucléaire. De ce fait, les billes de roulement en alliage de cobalt subissent une très forte activation neutronique qui produit du cobalt 60 à partir du cobalt 59, par absorption de neutrons. Le cobalt 60 présente une forte activité, si bien qu'en fin de vie du réacteur nucléaire ou après une longue durée de fonctionnement, le débit de dose au contact des billes en alliage de cobalt peut atteindre 30.000 rad/h ou 300 Gray/h, en raison de l'activité spécifique des billes, alors que le débit de dose de l'acier inoxydable constituant la partie supérieure de la barre de commande n'atteint que 2000 rad/h ou 20 Gray/h.

Dans le cas du remplacement d'une ou de plusieurs barres de commande du réacteur nucléaire ou encore dans le cas d'un démantèlement complet d'un réacteur nucléaire à eau bouillante usagé, il est nécessaire de démonter et de réaliser le stockage d'une barre ou de plusieurs dizaines de barres de commande qui, du fait de la très forte activité des billes serties dans leur partie supérieure, doivent être stockées dans une piscine sous une forte profondeur d'eau. Un tel stockage peut nécessiter l'utilisation de piscines de très grand volume dans lequel les barres de commande usagées doivent être stockées pendant de très longues périodes.

Le but de l'invention est donc de proposer un procédé de stockage d'une barre de commande usagée d'un réacteur nucléaire, comportant une pluralité de billes de roulement en alliage de cobalt montées et serties chacune dans un logement de la barre de commande, ce procédé permettant de réaliser un stockage compact d'une pluralité de barres de commande, dans une zone située à l'extérieur d'une piscine.

Dans ce but, on place la barre de commande sous eau dans une piscine, on réalise le dessertissage et l'extraction de chacune des billes de la barre de commande de son logement, on récupère les billes extraites dans un conteneur placé sous eau dans la piscine et on sort la barre de commande de la piscine pour la placer dans une zone de stockage à l'extérieur de la piscine.

L'invention est également relative à un dispositif permettant d'effectuer le stockage d'une barre de commande usagée d'un réacteur nucléaire à l'extérieur d'une piscine, ce dispositif comportant des moyens de dessertissage et de stockage des billes de la barre de commande.

Afin de bien faire comprendre l'invention, on va maintenant décrire, à titre d'exemple non limitatif, en se référant aux figures jointes en annexe, une barre de commande d'un réacteur nucléaire à eau bouillante, un dispositif permettant de réaliser le dessertissage de billes de roulement de la barre de commande et la mise en oeuvre du dispositif pour réaliser le stockage de la barre de commande en dehors d'une piscine de stockage.

La figure 1 est une vue en perspective éclatée de la cuve d'un réacteur nucléaire à eau bouillante contenant le coeur du réacteur.

La figure 2 est une vue en élévation d'une barre de commande du réacteur nucléaire représenté sur la figure 1.

La figure 3 est une vue de dessus et en coupe partielle d'une machine de dessertissage de billes de roulement d'une barre de commande d'un réacteur nucléaire à eau bouillante.

La figure 4 est une vue partielle en coupe suivant 4-4 de la figure 3.

La figure 5 est une vue en coupe par un plan vertical d'un conteneur de stockage de barres de commande d'un réacteur nucléaire à eau bouillante.

La figure 6 est une vue en coupe transversale du conteneur représenté sur la figure 5.

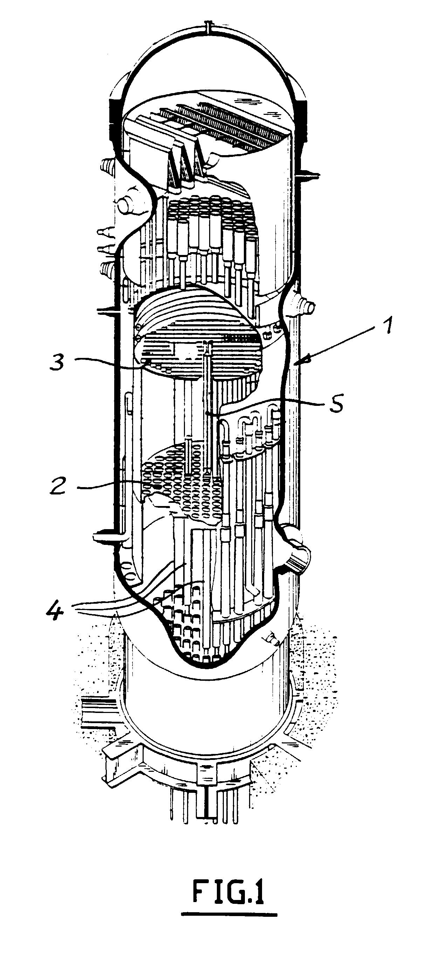

Sur la figure 1, on voit la cuve d'un réacteur nucléaire à eau bouillante désignée de manière générale par le repère 1 renfermant le coeur du réacteur (non représenté) entre une plaque de support de coeur 2 et une plaque supérieure de coeur 3. Dans sa partie inférieure, la cuve comporte des moyens de guidage et de déplacement 4 de barres de commande 5 à l'intérieur du coeur du réacteur.

Les barres de commande 5 en matériau absorbant sont réalisées sous une forme profilée et présentent une section transversale en forme de croix.

Les barres de commande sont introduites dans le coeur du réacteur par sa partie inférieure, à travers la plaque inférieure de coeur 2 et peuvent être insérées à l'intérieur du coeur, dans la direction verticale suivant une hauteur plus ou moins importante.

La partie supérieure de la barre de commande qui est introduite en premier dans le coeur du réacteur est soumise pratiquement de manière continue, pendant le fonctionnement du réacteur nucléaire, au flux de neutrons produits à l'intérieur du coeur. La partie supérieure des barres de commande 5 subit de ce fait une forte activation par les neutrons.

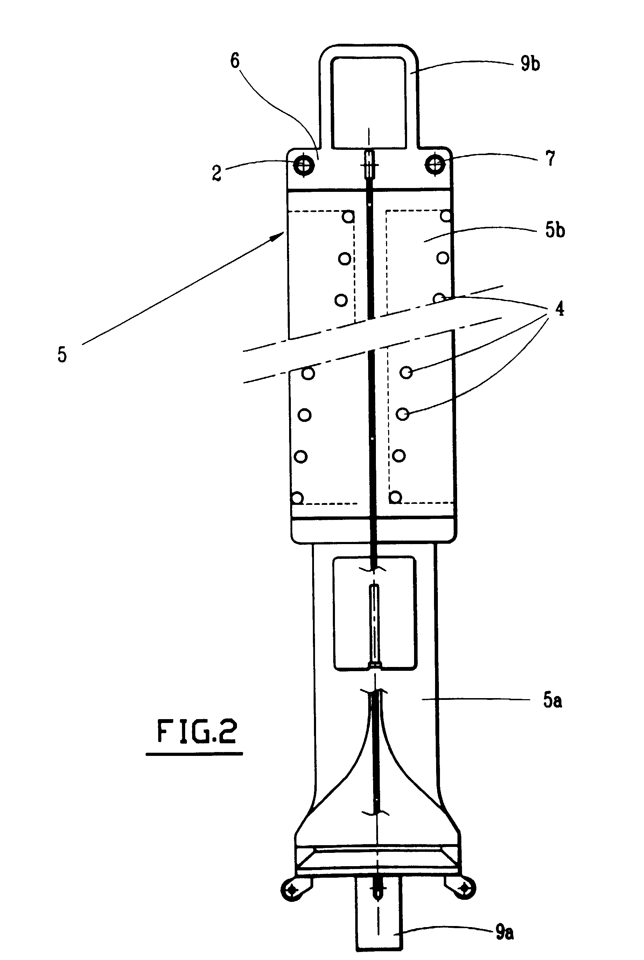

Sur la figure 2 on a représenté une barre de commande d'un réacteur nucléaire à eau bouillante désignée de manière générale par le repère 5.

La barre de commande 5 comporte une partie inférieure 5a comportant un pied 9a par l'intermédiaire duquel la barre de commande peut être reliée à une tige de commande pour son déplacement à l'intérieur du coeur du réacteur nucléaire.

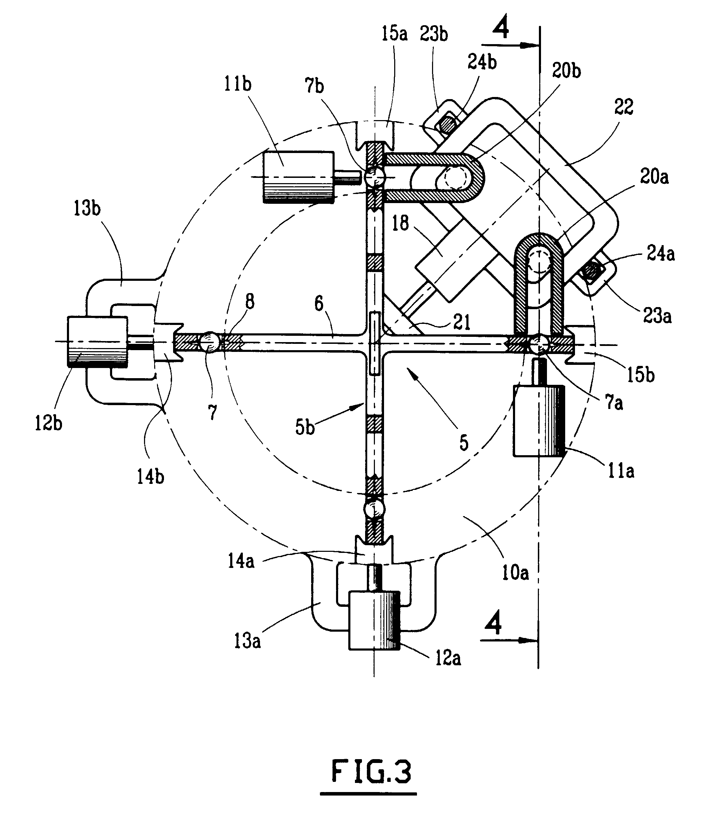

La partie supérieure 5b de la barre de commande présente une section en forme de croix qui est visible sur la figure 3. Du fait de cette forme, la barre de commande est souvent appelée croix de contrôle du réacteur nucléaire à eau bouillante. La barre de commande comporte quatre ailes disposées deux à deux à 90° qui renferment un matériau absorbant les neutrons.

La partie supérieure de la barre de commande 5, en forme de croisillon 6 à angle droit est réalisée en acier inoxydable. Sur cette partie supérieure 6 est fixée une poignée de manutention 9b.

Dans chacune des ailes du croisillon 6 en acier inoxydable est prévu un logement pour une bille de roulement 7, au voisinage de l'extrémité de l'aile du croisillon. La barre de commande 5 comporte donc quatre billes de roulement 7 permettant d'assurer son guidage à l'intérieur du réacteur nucléaire, lors de déplacements dans la direction verticale dans un sens et dans l'autre pour régler la réactivité du coeur du réacteur nucléaire.

Comme il est visible sur la figure 3, chacune des billes 7 de la barre de commande 5 est montée à l'intérieur d'un logement traversant le croisillon en acier inoxydable de la barre de commande par l'intermédiaire d'un axe 8 assurant le maintien de la bille 7 à l'intérieur du logement traversant une aile du croisillon de la barre de commande. De plus, la bille 7 est montée rotative par l'intermédiaire de l'axe 8.

Chacune des billes 7 d'une barre de commande 5 est réalisée en un alliage de cobalt résistant à l'usure tel qu'un stellite renfermant une teneur en cobalt voisine de 55 %. De ce fait, les billes de roulement 7 des barres de commande sont susceptibles d'être très fortement activées à l'intérieur du coeur du réacteur nucléaire. Dans le cas où il est nécessaire d'éliminer une ou plusieurs barres de commande d'un réacteur nucléaire à eau bouillante, par exemple dans le cas du remplacement d'une ou plusieurs barres de commande ou dans le cas d'un démantèlement du réacteur nucléaire, on extrait les barres de commande de la cuve du réacteur nucléaire pour les placer dans une disposition verticale à l'intérieur d'une piscine remplie d'eau, de manière que le niveau supérieur de la piscine se trouve à plusieurs mètres au-dessus de la partie supérieure des barres de commande. L'eau de la piscine assure la protection biologique des opérateurs chargés de l'élimination et du stockage des barres de commande usagées du réacteur nucléaire.

Les barres de commande qui ont été extraites de la cuve du réacteur nucléaire et transportées dans la piscine sont déposées sur un dispositif de stockage en fond de piscine qui comporte des moyens de réception du pied 9a de la barre de commande, de manière à permettre un stockage de la barre de commande dans le fond de la piscine, en position verticale.

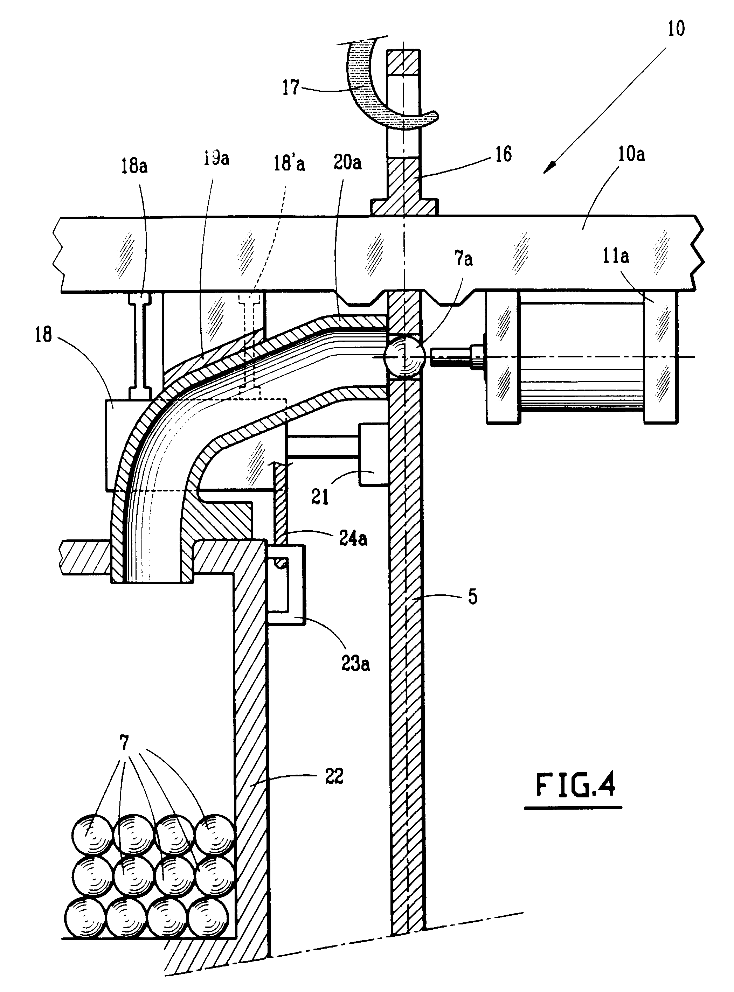

Sur les figures 3 et 4, on a représenté une machine de dessertissage et de récupération des billes en alliage de cobalt d'une barre de commande en forme de croix d'un réacteur nucléaire à eau bouillante, placée en position de stockage dans le fond d'une piscine.

La machine de dessertissage et de récupération des billes de roulement qui est désignée de manière générale par le repère 10 comporte un anneau d'appui 10a qui est destiné à venir reposer sur la partie supérieure de la barre de commande constituée par le croisillon en acier inoxydable 6 dans lequel sont montées les billes de roulement 7, la barre de commande 5 étant en position verticale à l'intérieur de la piscine.

Pour rendre visibles les différentes parties de la machine de dessertissage et de récupération de billes, l'anneau 10a reposant sur la partie supérieure de la barre de commande 5 n'a été représenté que sous la forme de son contour en traits mixtes, de manière à montrer les parties de la machine de dessertissage et de la barre de commande situées en-dessous de l'anneau d'appui 10a.

En se reportant aux figures 3 et 4, on voit que la machine de dessertissage comporte, fixés en-dessous de l'anneau d'appui 10a, deux vérins de dessertissage 11a et 11b dont le corps de vérin est solidaire de l'anneau et placé dans une disposition telle que la tige de vérin se trouve en vis-à-vis d'une bille de roulement respective 7a et 7b, les deux billes 7a et 7b étant placées aux extrémités de deux ailes à 90° du croisillon 6.

La machine de dessertissage comporte de plus deux vérins de serrage et de fixation 12a et 12b dont les corps de vérin sont fixés respectivement sur un support 13a et sur un support 13b dans des positions à 90° l'une de l'autre à la périphérie de l'anneau d'appui 10a. Les tiges de vérin des vérins de fixation 12a et 12b sont solidaires de patins 14a et 14b comportant un embrèvement destiné à venir s'engager sur une partie d'extrémité d'une aile du croisillon 6. Les deux patins 14a et 14b des deux vérins de fixation 12a et 12b viennent en prise avec les extrémités de deux ailes à 90° du croisillon 6.

Les parties d'extrémité de deux autres ailes à 90° du croisillon 6 viennent en appui respectivement sur un patin fixe 15a et sur un patin fixe 15b qui sont fixés sous l'anneau d'appui 10a dans des positions diamétralement opposées par rapport aux patins 14a et 14b des vérins de serrage 12a et 12b, respectivement.

Comme il est visible sur la figure 4, la partie supérieure de l'anneau d'appui 10a est solidaire d'ensembles d'accrochage 16 constitués chacun d'un anneau d'accrochage dans lequel peut être introduit un crochet 17 d'un dispositif de levage et de manutention. En utilisant quatre anneaux de levage répartis à 90° autour de l'anneau d'appui ou trois anneaux disposés à 120°, on peut réaliser l'accrochage de la machine de dessertissage par l'intermédiaire de quatre crochets de levage (ou de trois crochets), à un dispositif de levage et de manutention.

L'anneau d'appui est déposé, à l'intérieur de la piscine, sur la partie supérieure de la barre de commande 5, de manière que les vérins de fixation et les patins d'appui fixes de l'anneau d'appui 10a se trouvent en vis-à-vis des extrémités des ailes du croisillon 6.

Par manoeuvre des vérins de fixation 12a et 12b, on réalise le serrage et la fixation de l'anneau d'appui et de la machine de dessertissage sur la barre de commande.

La machine de dessertissage 10 comporte de plus un vérin d'appui et de bridage 18 qui est fixé par l'intermédiaire de supports 18a et 18'a sous l'anneau d'appui 10a. La tige du vérin d'appui et de bridage 18 dont l'axe se trouve dans le plan bissecteur d'un des dièdres du croisillon 6 lorsque la machine de dessertissage est fixée sur la barre de commande porte à son extrémité un patin d'appui 21 comportant deux faces d'appui inclinées faisant entre elles un dièdre de 90°, de manière à venir en contact avec deux faces internes des ailes d'un croisillon de la barre de commande 5 lorsqu'on actionne le vérin 18. On assure ainsi un positionnement parfait de la machine de dessertissage sur la barre de commande.

Comme il est visible sur la figure 3, après mise en place de l'anneau d'appui, les tiges des vérins de dessertissage 11a et 11b se trouvent en vis-à-vis de deux billes de roulement 7a et 7b disposées sur deux ailes à 90° du croisillon 6.

L'anneau d'appui 10a porte également, par l'intermédiaire de pièces de support telles que 19a (figure 4), deux goulottes d'évacuation 20a et 20b situées dans le prolongement des logements des billes 7a et 7b, lorsque la machine de dessertissage est mise en place et fixée sur la partie supérieure de la barre de commande 5.

La machine de dessertissage comporte de plus un conteneur 22 de récupération de billes qui est disposé sous l'anneau d'appui 10a, de manière que les parties d'extrémité des goulottes opposées aux extrémités situées en vis-à-vis de logements des billes de la barre de commande débouchent dans la partie supérieure du conteneur 22.

Le conteneur 22 présente des parois de forte épaisseur et repose sur le fond de la piscine dans laquelle on réalise le dessertissage.

Le conteneur 22 comporte deux anses de manutention 23a et 23b auxquelles sont fixés des câbles de levage 24a et 24b reliés à l'anneau d'appui 10a.

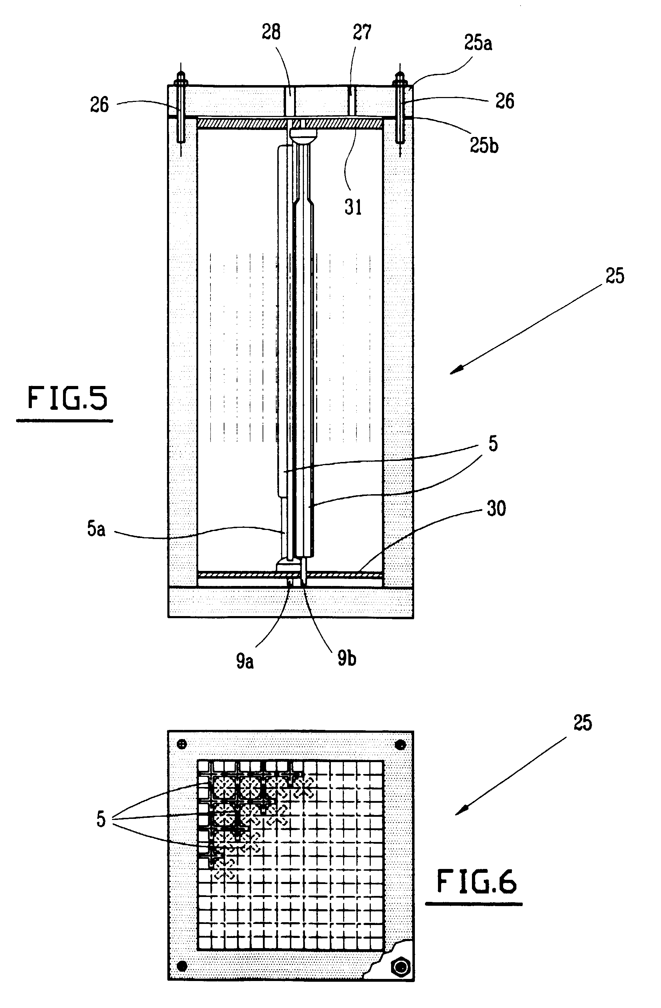

Sur les figures 5 et 6, on a représenté un conteneur 25 permettant de réaliser un stockage compact de barres de commande dans une zone située en-dehors de la piscine dans laquelle on réalise le dessertissage et la récupération des billes de roulement des barres de commande.

Le conteneur 25 comporte des parois épaisses en béton recouvertes intérieurement et extérieurement par une tôle peinte. Le conteneur 25 de forme parallélépipédique comporte une extrémité supérieure ouverte par laquelle peuvent être engagées des barres de commande 5 en position verticale. L'extrémité supérieure ouverte du conteneur 25 est destinée à recevoir un couvercle de fermeture 25a qui vient reposer sur des joints 25b et qui est fixé sur les parois du conteneur par des boulons 26. Le couvercle 25a est traversé par des ouvertures d'évents 27 et par une ouverture d'injection de béton liquide de radio-protection 28.

A l'intérieur du conteneur 25, au voisinage de son fond inférieur, est montée une plaque perforée 30 dans une disposition parallèle au fond du conteneur. Les ouvertures de la plaque perforée 30 présentent une forme circulaire et sont destinées à recevoir le pied 9a d'une barre de commande usagée ; les autres ouvertures en forme de fentes sont destinées à recevoir la poignée 9b d'une barre de commande usagée. Les ouvertures de la plaque 30 sont placées suivant une disposition régulière en réseau.

Les barres de commande 5 sont placées à l'intérieur du conteneur 25, pour les unes dans leur position normale d'utilisation, c'est-à-dire avec leur base 5a en partie inférieure venant reposer sur la plaque 30 et leur pied 9a engagé dans une ouverture circulaire de la plaque 30 et pour les autres en position retournée, c'est-à-dire avec leur poignée de manutention 9b venant s'engager dans une fente de la plaque de support 30.

En juxtaposant des barres de commande placées dans leur position verticale d'utilisation et des barres de commande en position retournée, on obtient une disposition compacte des barres de commande, comme il est visible en particulier sur la figure 6. Cette disposition tête-bêche des barres de commande permet en effet d'imbriquer les ailes des barres de commande les unes par rapport aux autres.

Lorsqu'on a effectué le remplissage complet du conteneur avec des barres de commande 5, on met en place dans l'ouverture supérieure d'entrée du conteneur, sur les parties supérieures des barres de commande, une grille de maintien 31 des barres de commande qui comporte un réseau d'ouvertures ayant une disposition inversée par rapport au réseau d'ouvertures de la plaque de support 30, de sorte que les ouvertures circulaires de la plaque 30 viennent dans l'alignement de fentes de la grille 31 et inversement les fentes de la plaque 30 viennent dans l'alignement d'ouvertures circulaires de la grille 31. Lors de la mise en place de la grille 31, les ouvertures de la grille 31 viennent s'engager sur les pieds ou les poignées des barres de commande 5. Les barres de commande sont alors parfaitement maintenues à l'intérieur du conteneur 25. On met en place et on fixe le couvercle 25a de fermeture du conteneur 25.

Le conteneur de stockage 25 pourrait également être placé en position horizontale, de manière à recevoir les barres de commande 5 disposées horizontalement et placées tête-bêche.

On va maintenant décrire, en se référant à l'ensemble des figures, une opération de stockage des barres de commande usagées d'un réacteur nucléaire à eau bouillante, par exemple dans le cadre d'une opération de démantèlement du réacteur nucléaire.

Dans un premier temps, on extrait les barres de commande 5 du réacteur nucléaire et on place les barres extraites de la cuve dans une piscine sous une hauteur d'eau suffisante pour assurer la radio-protection du personnel chargé de l'opération de récupération et de stockage des barres de commande.

Les barres de commande sont déposées sur un support en fond de piscine permettant de les maintenir dans une position verticale correspondant à leur position verticale de service.

En utilisant un moyen de levage et de manutention, on place un dispositif de dessertissage de billes de roulement tel que le dispositif 10 représenté sur les figures 3 et 4 sur une première barre de commande 5 reposant en fond de piscine. L'anneau d'appui 10a du dispositif de dessertissage et de récupération de billes 10 vient reposer sur la partie supérieure des ailes du croisillon de la barre de commande, dans une orientation telle que représentée sur la figure 3.

On actionne les vérins de fixation 12a et 12b et le vérin d'appui et de bridage 18, de manière à assurer la fixation du dispositif de dessertissage dans sa position de travail sur la barre de commande 5.

On actionne alors les vérins de dessertissage 11a et 11b, de manière que l'extrémité des tiges des vérins exerce une poussée sur deux billes de roulement 7a et 7b de la barre de commande.

Par l'intermédiaire des vérins 11a et 11b, on exerce sur les billes de roulement 7a et 7b des forces suffisantes pour produire une rupture des axes 8 des billes de roulement 7a et 7b et un dessertissage et une extraction des billes de roulement qui tombent dans le fond du conteneur 22 déposé en fond de piscine, par l'intermédiaire de la goulotte 20a ou 20b. On relâche alors la pression des vérins de fixation 12a et 12b et on reprend en charge avec le dispositif de levage et de manutention, le dispositif de dessertissage, pour le faire tourner de 180° avant de le reposer sur l'extrémité supérieure de la barre de commande 5.

On peut alors réaliser la fixation de l'anneau d'appui sur la barre de commande par l'intermédiaire des vérins de fixation 12a et 12b, puis l'extraction des deux billes de roulement restantes de la barre de commande 5.

On relâche alors la pression dans les vérins de fixation 12a et 12b, on reprend en charge le dispositif de dessertissage 10 et le conteneur 22 pour les placer en position de dessertissage d'une nouvelle barre de commande.

La barre de commande 5 de laquelle les billes de roulement ont été extraites présente une activation résiduelle relativement faible et peut être sortie de la piscine et placée dans le conteneur 25 disposé dans une zone de stockage à sec, à l'extérieur de la piscine.

On réalise ainsi de manière successive l'extraction des billes de toutes les barres de commande et le stockage des barres de commande dans des positions tête-bêche à l'intérieur du conteneur 25.

Le conteneur 25 représenté sur les figures 5 et 6 est prévu pour assurer le stockage de quarante-neuf barres de commande qui se trouvent imbriquées l'une dans l'autre en position de stockage du fait de leur disposition tête-bêche à l'intérieur du conteneur. La plaque de support 30 et la grille de maintien 31 du conteneur 25 présentent un réseau de trous et de fentes à mailles carrées 7 x 7.

Les billes de roulement 7 qui sont toutes identiques et qui présentent un diamètre de 15 mm s'empilent de manière compacte à l'intérieur du conteneur 22. L'empilement de billes 7 présente une forte activité mais un faible volume de sorte qu'il est possible de prévoir un conteneur permettant de stocker un très grand nombre de billes sous un volume faible. On prévoit généralement un conteneur 22 permettant de récupérer de trois cents à quatre cents billes, c'est-à-dire d'assurer le dessertissage de soixante-quinze à cent barres de commande au cours d'opérations de démantèlement de réacteurs nucléaires à eau bouillante.

Lorsque le conteneur 22 est plein de billes, on le dépose en fond de piscine dans une zone de stockage et de désactivation. Le conteneur 22 étant suspendu à l'anneau d'appui 10a du dispositif de dessertissage par les câbles 24a et 24b, on transporte l'ensemble du dispositif de dessertissage dans la zone de stockage et de désactivation, on dépose le conteneur 22 et on coupe les câbles 24a et 24b pour séparer le dispositif de dessertissage du conteneur 22 plein de billes présentant une forte activité.

On peut alors équiper le dispositif de dessertissage d'un nouveau conteneur pour effectuer d'autres opérations de dessertissage et de récupération de billes de roulement de barres de commande.

Bien entendu, les billes présentant une forte activation peuvent être ensuite transportées de la zone de stockage et de désactivation de la piscine, à l'intérieur de leur conteneur, dans une zone de stockage de longue durée.

Le procédé suivant l'invention permet donc de stocker les barres de commande d'un réacteur nucléaire à eau bouillante, sous un faible volume et à sec, après avoir séparé les billes de roulement à forte activité de ces barres de commande.

Le procédé et le dispositif suivant l'invention présentent donc un grand intérêt dans le cadre d'opérations de remplacement des barres de commande d'un réacteur nucléaire à eau bouillante ou dans le cadre d'une opération de démantèlement du réacteur nucléaire.

L'invention ne se limite pas au mode de réalisation qui a été décrit.

C'est ainsi qu'on peut utiliser un dispositif de dessertissage présentant une forme et une structure différentes de celles qui ont été décrites.

Le procédé et le dispositif suivant l'invention peuvent être adaptés à toute forme de barre de commande ou même à d'autre dispositifs comportant des billes de roulement présentant une forte activité.

L'invention peut s'appliquer dans le cas de réacteurs nucléaires différents de réacteurs nucléaires refroidis par de l'eau bouillante.

## Revendications

1. Procédé de stockage d'une barre de commande usagée (5) d'un réacteur nucléaire, comportant une pluralité de billes de roulement (7, 7a, 7b) en alliage de cobalt montées et serties chacune dans un logement de la barre de commande (5), caractérisé par le fait qu'on place la barre de commande (5) sous eau dans une piscine, qu'on réalise le dessertissage et l'extraction de chacune des billes (7, 7a, 7b) de la barre de commande (5) de son logement, qu'on récupère les billes (7, 7a, 7b) extraites dans un conteneur (22) placé sous eau dans la piscine et qu'on sort la barre de commande (5) de la piscine pour la placer dans une zone de stockage à l'extérieur de la piscine.

2. Procédé suivant la revendication 1, caractérisé par le fait qu'on place la barre de commande (5) dans une disposition verticale sur le fond de la piscine, qu'on dépose un dispositif de dessertissage (10) sur la partie supérieure de la barre de commande (5), qu'on réalise la fixation du dispositif de dessertissage (10) sur la barre de commande et qu'on réalise le dessertissage et l'extraction des billes avec le dispositif de dessertissage (10) fixé sur la partie supérieure de la barre de commande (5).

3. Procédé suivant l'une quelconque des revendications 1 et 2, dans le cas d'une barre de commande en forme de croisillon comportant quatre ailes à 90° portant chacune une bille de roulement (7, 7a, 7b), caractérisé par le fait qu'on réalise dans un premier temps le dessertissage et la récupération de deux billes fixées sur deux ailes de la barre de commande (5) à 90°, puis le dessertissage et la récupération de deux billes (7) sur les deux autres ailes à 90° du croisillon de la barre de commande (5).

4. Procédé suivant l'une quelconque des revendications 1, 2 et 3, pour le stockage d'une pluralité de barres de commande (5), caractérisé par le fait que la zone de stockage des barres de commande (5) à l'extérieur de la piscine comporte un conteneur de stockage (25) dans lequel on introduit les barres de commande après dessertissage et extraction des billes (7, 7a, 7b) de chacune des barres de commande de la pluralité de barres de commande.

5. Dispositif de stockage d'une barre de commande usagée d'un réacteur nucléaire comportant une pluralité de billes de roulement (7, 7a, 7b) montées et serties chacune dans un logement de la barre de commande, caractérisé par le fait qu'il comporte un dispositif de dessertissage (10) des billes (7, 7a, 7b) de la barre de commande, un conteneur (22) de récupération des billes (7, 7a, 7b) et un conteneur (25) de stockage de la barre de commande après dessertissage des billes.

6. Dispositif suivant la revendication 5, caractérisé par le fait que le dispositif de dessertissage (10) comporte des moyens (12a, 12b, 15a, 15b, 18) pour sa fixation en position de travail sur la barre de commande (5), des moyens de dessertissage des billes (11a, 11b) et des moyens (20a, 20b) de guidage des billes (7, 7a, 7b) extraites des logements de la barre de commande (5), pour les introduire dans le conteneur de stockage (22).

7. Dispositif de stockage suivant la revendication 6, dans le cas d'une barre de commande (5) ayant la forme d'un croisillon comportant quatre ailes à 90° dans chacune desquelles est sertie une bille de roulement (7, 7a, 7b) caractérisé par le fait que le support (10a) du dispositif de dessertissage (10) présente la forme d'un anneau destiné à venir en appui sur une partie de chacune des ailes du croisillon de la barre de commande (5), que les dispositifs de fixation du dispositif de dessertissage (10) sur la barre de commande (5) sont constitués par deux ensembles comportant chacun une butée (15a, 15b) fixée sur l'anneau support (10a) du dispositif de dessertissage et deux vérins de fixation (12a, 12b) dont le corps est fixé sur l'anneau de support (10a) du dispositif de dessertissage (10) dans des positions diamétralement opposées par rapport aux butées (15a, 15b) fixées sur l'anneau de support (10a) et comportant chacun une tige munie d'une butée (14a, 14b) de manière à réaliser la fixation de l'anneau de support (10a) sur la barre de commande (5) par serrage des butées (15a, 15b) fixées sur l'anneau support (10a) et des butées d'appui (14a, 14b) fixées sur les tiges des vérins de fixation (12a, 12b) sur des parties d'extrémité des ailes du croisillon de la barre de commande (5).

8. Dispositif suivant la revendication 7, caractérisé par le fait que les moyens de dessertissage (11a, llb) sont constitués par deux vérins (11a, 11b) comportant un corps fixé sur l'anneau de support (10a) et une tige placée en vis-à-vis d'une bille de roulement (7, 7a, 7b) dans la position de fixation de l'anneau de support (10a) sur la barre de commande (5).

9. Dispositif suivant la revendication 8, caractérisé par le fait que les moyens de guidage (20a, 20b) des billes extraites des logements de la barre de commande (5) sont constitués par deux goulottes (20a, 20b) solidaires de l'anneau de support (10a).

10. Dispositif suivant l'une quelconque des revendications 8 et 9, caractérisé par le fait que les moyens de fixation du dispositif de dessertissage (10) sur la barre de commande (5) comportent de plus un vérin d'appui et de bridage (18) comprenant un corps fixé sur l'anneau de support (10a) et une tige de vérin solidaire à son extrémité d'une butée d'appui (21), dans une disposition permettant la mise en appui de la butée d'appui (21) contre deux ailes du croisillon constituant la barre de commande (5), dans un angle dièdre du croisillon.

11. Dispositif suivant l'une quelconque des revendications 8 à 10, caractérisé par le fait que l'anneau de support (10a) comporte au moins trois anneaux de levage (16) fixés sur l'une de ses faces pour permettre le levage du dispositif de dessertissage.

12. Dispositif suivant l'une quelconque des revendications 8 à 11, caractérisé par le fait que le conteneur (22) est relié à l'anneau de support (10a) par l'intermédiaire de câbles (24a, 24b).

13. Dispositif suivant l'une quelconque des revendications 6 à 12, pour le stockage d'une pluralité de barres de commande (5) usagées, caractérisé par le fait que le conteneur de stockage (25) comporte une plaque de support (30) traversée par des ouvertures de réception de parties d'extrémité en saillie (9a, 9b) des barres de commande (5) disposées suivant un réseau régulier, pour assurer un logement compact des barres de commande (5) à l'intérieur du conteneur (25).

14. Dispositif suivant la revendication 13, caractérisé par le fait que les ouvertures de la plaque de support (30) sont de deux types différents, de manière à recevoir des parties d'extrémité en saillie (9a, 9b) de formes différentes des barres de commande disposées à l'une ou à l'autre extrémité de chacune des barres de commande.

## Patentansprüche

1. Verfahren zur Lagerung benutzter Kontrollstäbe (5) von Kernreaktoren, die mehrere Lagerkugeln (7, 7a, 7b) aus einer Kobaltlegierung umfassen, wobei jede Lagerkugel in einen Sitz des Kontrollstabes (5) montiert und gefaßt ist,
dadurch gekennzeichnet, daß
der Kontrollstab (5) in einem Becken unter Wasser abgestellt wird, daß jede einzelne Kugel (7, 7a, 7b) aus dem Lager des Kontrollstabes (5) herausgenommen und entfernt wird, daß die entfernten Kugeln (7, 7a, 7b) in einem Behälter (22) gesammelt werden, der unter Wasser in einem Becken angeordnet ist und daß der Kontrollstab (5) aus dem Becken genommen wird, um in einem Lagerbereich außerhalb des Beckens abgestellt zu werden.

2. Verfahren nach Anspruch 1, dadurch gekennzeichnet, daß der Kontrollstab (5) in einer vertikalen Anordnung auf dem Boden des Beckens abgestellt wird, daß auf dem oberen Bereich des Kontrollstabs (5) eine Vorrichtung zum Herausnehmen (10) abgestellt wird, daß die Befestigung der Vorrichtung zum Herausnehmen (10) auf dem Kontrollstab durchgeführt wird und daß die Kugeln mit der Vorrichtung zum Herausnehmen (10), die auf dem oberen Bereich des Kontrollstabs (5) befestigt ist, herausgenommen und entfernt werden.

3. Verfahren nach einem der Ansprüche 1 oder 2, wobei die Kontrollstäbe sternförmig sind mit vier zueinander um 90° versetzten Flügeln, wobei jeder Flügel eine Lagerkugel (7, 7a, 7b) aufweist, dadurch gekennzeichnet, daß als erstes die auf zwei um 90° versetzt angeordneten Flügeln des Kontrollstabes (5) befestigten Kugeln herausgenommen und gesammelt werden, und dann die zwei auf den anderen zwei um 90° versetzt angeordneten Flügeln des sternförmigen Führungsstabes (5) befindlichen Kugeln (7) herausgenommen und gesammelt werden.

4. Verfahren nach einem der Ansprüche 1 bis 3, zur Lagerung mehrerer Kontrollstäbe (5), dadurch gekennzeichnet, daß der Lagerbereich der Kontrollstäbe (5) außerhalb des Beckens einen Lagerbehälter (25) aufweist, in den die Kontrollstäbe nach dem Herausnehmen und Entfernen der Kugel (7, 7a, 7b) aus jedem einzelnen der Kontrollstäbe eingeführt werden.

5. Vorrichtung zur Lagerung benutzter Kontrollstäbe von Kernreaktoren mit mehreren Lagerkugeln (7, 7a, 7b), wobei jede Lagerkugel in einem Sitz des Kontrollstabes montiert und gefaßt ist, gekennzeichnet durch eine Vorrichtung zum Herausnehmen (10) der Kugeln (7, 7a, 7b) des Kontrollstabs, einen Sammelbehälter (22) für Kugeln (7, 7a, 7b) und einen Lagerbehälter (25) für Kontrollstäbe nach dem Entfernen der Kugeln.

6. Vorrichtung nach Anspruch 5, dadurch gekennzeichnet, daß die Vorrichtung zum Herausnehmen (10) Mittel (12a, 12b, 15a, 15b, 18) für ihre Befestigung in Arbeitsstellung auf dem Kontrollstab (5), Mittel (lla, 11b) zum Herausnehmen der Kugeln und Mittel (20a, 20b) zur Führung der aus den Sitzen des Kontrollstabes (5) entfernten Kugeln (7, 7a, 7b) umfaßt, um die Kugeln in Lagerbehälter (22) einzuführen.

7. Vorrichtung zur Lagerung nach Anspruch 6, wobei ein Kontrollstab (5) sternförmig ist und vier um 90° zueinander versetzte Flügel aufweist, in denen jeweils eine Lagerkugel (7, 7a, 7b) gefaßt ist, dadurch gekennzeichnet, daß der Träger (10a) der Vorrichtung zum Herausnehmen (10) ringförmig ist, um auf einem Teil des Flügels des sternförmigen Kontrollstabes (5) in Anschlag zu gelangen, daß die Befestigungseinrichtung der Einrichtung zum Herausnehmen (10) auf dem Kontrollsstab (5) durch zwei Einheiten gebildet ist, wobei jede einen Anschlag (15a, 15b), der auf dem Trägerring (10a) der Einrichtung zum Herausnehmen befestigt ist, und zwei Befestigungszylinder (12a, 12b) aufweist, deren Körper auf dem Trägerring (10a) der Einrichtung zum Herausnehmen (10) in zu den auf dem Trägerring (10a) befestigten Anschlägen (15a, 15b) diametrial gegenüberliegenden Positionen befestigt sind, wobei jeder Befestigungszylinder eine mit einem Anschlag (14a, 14b versehene Stange aufweist, um die Befestigung des Trägerrings (10a) auf dem Kontrollstab (5) durch Schließen der auf dem Trägerring (10a) befestigten Anschläge (15a, 15b) und der Halteanschläge (14a, 14b) durchzuführen, die auf den Stangen der Befestigungszylinder (12a, 12b) und auf den äußeren Bereichen der Flügel des sternförmigen Kontrollstabes (5) befestigt sind.

8. Vorrichtung nach Anspruch 7, dadurch gekennzeichnet, daß die Mittel zum Herausnehmen (11a,,11b) durch zwei Zylinder (11a, 11b) gebildet sind, die einen Körper, der auf dem Trägerring (10a) befestigt ist, und eine Stange aufweisen, die gegenüber einer Lagerkugel (7, 7a, 7b) angeordnet ist, wobei die Kugel sich in einer Position zur Befestigung des Trägerrings (10a) auf dem Kontrollstab (5) befindet.

9. Vorrichtung nach Anspruch 8, dadurch gekennzeichnet, daß die Führungseinrichtungen (10a, 10b) der aus den Sitzen des Kontrollstabs (5) entfernten Kugeln durch zwei mit dem Trägerring (10a) verbundene Rinnen (20a, 20b) gebildet sind.

10. Vorrichtung nach einem der Ansprüche 8 oder 9, dadurch gekennzeichnet, daß die Befestigungsmittel der Einrichtung zum Herausnehmen (10) auf dem Kontrollstab (5) ferner einen Anschlagszylinder und einen Zylinderflansch (18) umfassen, der einen auf dem Trägerring (10a) befestigten Körper und eine Stange des Zylinders aufweist, an deren Ende ein Halteanschlag (21) in einer Anordnung befestigt ist, die es ermöglicht, den Halteanschlag (21) gegenüber zwei Flügeln des sternförmigen Führungsstabes (5) in einen Öffnungswinkel des Sterns bringen zu können.

11. Vorrichtung nach einem der Ansprüche 8 bis 10, dadurch gekennzeichnet, daß der Trägerring (10a) mindestens drei Heberinge (16) umfaßt, die auf einer seiner Flächen befestigt sind, um die Einrichtung zum Herausnehmen heben zu können.

12. Vorrichtung nach einem der Ansprüche 8 bis 11, dadurch gekennzeichnet, daß der Behälter (22) mit Hilfe von Kabeln (24a, 24b) mit dem Trägerring (10a) verbunden ist.

13. Vorrichtung nach einem der Ansprüche 6 bis 12 zur Lagerung mehrerer benutzter Kontrollstäbe (5), dadurch gekennzeichnet, daß der Lagerbehälter (25) eine Trägerplatte (30) umfaßt, die Aufnahmeöffnungen aufweist, durch die Kontrollstäbe (5) hindurchgehen, wobei deren äußerer Bereich (9a, 9b) aus der Trägerplatte (30) ragt, wobei die Kontrollstäbe entsprechend einem regelmäßigen Netz angeordnet sind, damit die Kontrollstäbe (5) im Inneren des Behälters (25) kompakt gelagert werden.

14. Vorrichtung nach Anspruch 13, dadurch gekennzeichnet, daß die Öffnungen der Trägerplatte (30) zwei unterschiedliche Typen sind, um überstehende Endbereiche (9a, 9b) der Kontrollstäbe von unterschiedlicher Form aufzunehmen, wobei die Öffnungen an einem oder an dem anderen Ende jedes Kontrollstabes angeordnet sind.

## Claims

1. Process for storing a used nuclear reactor control rod (5) comprising a plurality of rolling balls (7, 7a, 7b) made of a cobalt alloy, each one being mounted and set in a housing of the control rod (5),
**characterised in that** the control rod (5) is placed under water in a reactor well,
**in that** each of the balls (7, 7a, 7b) of the control rod (5) is released and extracted from its housing,
**in that** the extracted balls (7, 7a, 7b) are reclaimed in a container (22) which is placed under water in the reactor well and
**in that** the control rod (5) is removed from the reactor well in order to place it in a storage zone external to the reactor well.

2. Process according to Claim 1,
**characterised in that** the control rod (5) is placed in a vertical arrangement on the base of the reactor well,
**in that** a releasing device (10) is placed on the upper part of the control rod (5),
**in that** the releasing device (10) is attached to the control rod and
**in that** the balls are released and extracted by means of the releasing device (10) which is fixed to the upper part of the control rod (5).

3. Process according to any one of the Claims land 2 in the case of a control rod in the shape of a cross-piece comprising four wings at 90°, each carrying a rolling ball (7, 7a, 7b), **characterised in that** first of all two balls fixed on two wings of the control rod (5) at 90° are released and reclaimed, then two balls (7) on the other two wings at 90° of the cross-piece of the control rod (5) are released and reclaimed.

4. Process according to any one of the Claims 1, 2 and 3 for the storage of a plurality of control rods (5) **characterised in that** the storage zone for the control rods (5) outwith the reactor well comprises a storage container (25) into which the control rods are introduced after release and extraction of the balls (7, 7a, 7b) from each of the control rods of the plurality of control rods.

5. Device for the storage of a used nuclear reactor control rod comprising a plurality of rolling balls (7, 7a, 7b), each mounted and set in a housing of the control rod, **characterised in that** said device comprises a releasing device (10) for the balls (7, 7a, 7b) from the control rod, a container (22) for recovery of the balls (7, 7a, 7b) and a container (25) for storage of the control rod after release of the balls.

6. Device according to Claim 5 **characterised in that** the releasing device (10) comprises means (12, 12b, 15a, 15b, 18) for its attachment in an operating position on the control rod (5), means for removal of the balls (11a, llb) and means (20a, 20b) for directing the balls (7, 7a, 7b) extracted from the housings of the control rod (5) in order to introduce them into the storage container (22).

7. Storage device according to Claim 6 in the case of a control rod (5) having the shape of a cross-piece comprising four wings at 90° in each of which there is set a rolling ball (7, 7a, 7b) **characterised in that** the support (10a) of the releasing device (10) has the shape of a ring intended to be supported on a section of each of the wings of the cross-piece of the control rod (5),
**in that** the fixing devices of the releasing device (10) on the control rod (5) consist of two assemblies, each comprising a catch (15a, 15b) fixed on the ring support (10a) of the releasing device and two attachment screw jacks (12a, 12b) each body of which is fixed on the support ring (10a) of the releasing device (10) in positions diametrically opposite with respect to the catches (15a, 15b) fixed on the support ring (10a) and each comprising a rod supplied with a catch (14a, 14b) in such a manner that the attachment of the ring support (10a) on the control rod (5) is achieved by clamping of the catches (15a, 15b) fixed on the support ring (10a) and of the support catches (14a, 14b) fixed on the rods of the attachment screw jacks (12a, 12b) on the end sections of the wings of the cross-piece of the control rod (5).

8. Device according to Claim 7 **characterised in that** the releasing means (11a, 11b) consist of two screw jacks (11a, 11b) comprising a body fixed on the support ring (10a) and a rod placed facing a rolling ball (7, 7a, 7b) in the fixing position of the support ring (10a) on the control rod (5).

9. Device according to Claim 8 **characterised in that** the guiding means (20a, 20b) for the balls extracted from the housings of the control rod (5) comprise two chutes (20a, 20b) which are integral with the support ring (10a).

10. Device according to any one of the Claims 8 and 9 **characterised in that** the fixing means of the releasing device (10) on the control rod (5) comprise furthermore a support screw jack and a collar (18), consisting of a body fixed on the support ring (10a) and a screw jack rod, which is integral at its end with a support catch (21), in an arrangement allowing the support catch (21) to be supported on two wings of the cross-piece forming the control rod (5), at a dihedral angle to the cross-piece.

11. Device according to any one of the Claims 8 to 10 **characterised in that** the support ring (10a) comprises at least three lifting rings (16) fixed on one of its faces in order to allow the lifting of the releasing means.

12. Device according to any one of the Claims 8 to 11 **characterised in that** the container (22) is connected to the support ring (10a) by means of cables (24a, 24b).

13. Device according to any one of the Claims 6 to 12 for the storage of a plurality of used control rods (5) **characterised in that** the storage container (25) comprises a support plate (30) which is penetrated by receiving openings for the projecting end sections (9a, 9b) of the control rods (5), arranged in accordance with a regular grid in order to ensure a compact housing of the command rods (5) in the inside of the container (25).

14. Device according to Claim 13 **characterised in that** the openings of the support plate (30) are of two different types, such as to receive the projecting end sections (9a, 9b) of different shapes of control rods arranged at either end of each of the control rods.
